# EUROPEAN PATENT SPECIFICATION

(11) **EP 3 588 990 B1**
(45) Date of publication and mention of the grant of the patent: **06.10.2021**
(21) Application number: 19179874.3
(22) Date of filing: 13.06.2019
(51) Int. Cl.: H04W 4/024, H04W 4/02, H04W 4/029, H04W 4/44, H04W 4/46, H04W 4/80, B64C 39/02, G05D 1/00, G05D 1/06

(54) **ASSISTING FLYING DRONES TO SELECT AND APPROACH VEHICLES FOR IMPROVED FLYING RANGE**
UNTERSTÜTZUNG VON FLUGDROHNEN ZUR AUSWAHL UND ANNÄHERUNG VON FAHRZEUGEN FÜR EINEN VERBESSERTEN FLUGBEREICH
ASSISTANCE À DES DRONES VOLANTS POUR SÉLECTIONNER ET APPROCHER DES VÉHICULES AFIN D'AMÉLIORER LA PLAGE DE VOL

(30) Priority: 26.06.2018 US 201816018948
(43) Date of publication of application: 01.01.2020
(73) Proprietor: TOYOTA JIDOSHA KABUSHIKI KAISHA, Toyota-Shi, Aichi-Ken 471-8571 (JP)
(72) Inventor: LU, Hongsheng, Mountain View, CA California 94043 (US); BANSAL, Gaurav, Mountain View, CA California 94043 (US); KENNEY, John, Mountain View, CA California 94043 (US)
(74) Representative: TBK

(56) References cited:
- EP-A1- 3 125 064
- EP-A1- 3 265 383
- US-A1- 2017 365 166

## Description

### BACKGROUND

The specification relates to selecting, for a flying autonomous robot (a "flying drone"), a connected vehicle to land on so that a flying range of the flying autonomous robot is improved (e.g., increased).

A package delivery drone is a flying autonomous robot that delivers packages to specified locations. An obstacle to widespread deployment of package delivery drones is that these drones have a short delivery range (i.e., a short flying range) due to the size and weight limitations of their batteries.

Document EP 3 125 064 A1 discloses cargo transport system and method based on an unmanned aerial vehicle, UAV. The cargo transport system includes an UAV (and a vehicle that can send and receive the UAV, so that cargos can be transported between the vehicle and another terminal by the UAV. The UAV is provided with a navigation system that guides the UAV to fly between the vehicle and the another terminal.

Document EP 3 265 383 A1 discloses unmanned aerial vehicles, UAVs which fly to destinations (e.g., for delivering items) and may land on transportation vehicles (e.g., delivery trucks, etc.) for temporary transport. An agreement with the owner of the transportation vehicles (e.g., a shipping carrier) may be made for obtaining consent and determining compensation for landings, and the associated transportation vehicles that are available for landings may be identified by markers on the roof or other identification techniques.

### SUMMARY

Vehicles may be used to increase the flying range of a flying autonomous robot by landing the flying autonomous robot on a connected vehicle. The flying autonomous robot may then travel a distance on the connected vehicle, thereby increasing the flying range of the flying autonomous robot.

Problems associated with landing a flying autonomous robot on a connected vehicle include the following: it is difficult to select which connected vehicle a flying autonomous robot should land on for travel to the intended destination of the flying autonomous robot; and it is difficult for the flying autonomous robot to smoothly approach the selected connected vehicle, and this smooth approach is a required prerequisite for safely and consistently landing the flying autonomous robot on the roof or trunks of connected vehicles. Described herein are embodiments of a drone assistance system that is operable to solve both of these problems. Although package delivery is discussed, the functionality of the drone assistance system is not limited to package delivery. Instead, the functionality provided by the drone assistance system can also be used for food delivery, helping people to find their vehicle among many other vehicles (e.g., a parent picking up a child at school, a person looking for their ride share car among many cars on a crowded street, etc.), and various other use cases.

A flying autonomous robot is now referred to as a "drone" in this description. Some portions of this description may revert to using the terminology "flying autonomous robot." However, as used herein, a drone and a flying autonomous robot are synonymous.

In some embodiments, vehicles that are equipped with Dedicated Short-Range Communication (DSRC) transmit a Basic Safety Message ("BSM message") at a periodic interval (e.g., every 0.1 seconds). These vehicles are equipped with a DSRC radio that transmits and receives such messages. BSM messages include, as their payload, digital data that describes, among other things, the: path history of the vehicle which transmits the BSM message; and a heading or trajectory of the vehicle. In some embodiments, the drone assistance system includes software installed in an onboard vehicle computer of a vehicle that is equipped with DSRC. The drone assistance system is operable to generate or modify the DSRC messages transmitted by the DSRC radio of the vehicle so that these messages notify nearby drones about: (a) whether the vehicle is available to provide assistance to the drone (e.g., a ride which increases the flying range of the drone); (b) whether the vehicle is currently in motion [a first example of "kinematic information"]; (c) the path, heading or (future) trajectory of the vehicle [herein referred to as "vehicle future path data"]; and (d) the Global Positioning System (GPS) location of the vehicle [a second example of "kinematic information"].

In some embodiments, the drones include a DSRC radio. The drones receive BSM messages from multiple vehicles, each of which include their own instance of the drone assistance system and a DSRC radio. The drones include a selection module stored in an onboard computer of the drone. The selection module includes software that analyze vehicle future path data and kinematic information included in BSM messages to (1) select which vehicle to land on (and ride on) based on whether the vehicles are currently in motion and on a path that is consistent with the delivery location [or "delivery destination"] for the drone and (2) determine how to approach the selected vehicle so that it is landed on smoothly and accurately by the drone.

There is no existing solution that uses regular consumer vehicles to increase the delivery range of package delivery drones. The drone assistance system achieves this functionality using vehicle path data and kinematic information which is included in DSRC messages transmitted by a vehicle that includes the drone assistance system. The drone assistance system also uses the vehicle path data and the kinematic information to aide drones to approach and land on a vehicle (or near some other endpoint), which would be far more difficult to accomplish without the drone assistance system, because drones would not otherwise have access to BSM data that provides consistent and accurate information describing the vehicle path data and kinematic information about the vehicle. The BSM data provided by the drone assistance system to the drone includes consistent information because it is provided once every 0.1 seconds, or some other regular interval. The BSM data provided by the drone assistance system to the drone includes accurate information because it describes a GPS location of the vehicle with an accuracy that is substantially equal to half a width of a roadway being traveled by the vehicle.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

The present invention defines a method according to claim 1, a system according to claim 8 and a computer program product according to claim 13. Further embodiments are set forth in the dependent claims 2-7, 9-12 and 14-15.

Although the invention is only defined by the claims, the below embodiments, examples and aspects are present for aiding in understanding the background and advantages of the invention.

### BRIEF DESCRIPTION OF THE DRAWINGS

The disclosure is illustrated by way of example, and not by way of limitation in the figures of the accompanying drawings in which like reference numerals are used to refer to similar elements.
Figure 1 is a block diagram illustrating an operating environment for a drone assistance system according to some embodiments.
Figure 2A is a block diagram illustrating an example computer system including the drone assistance system according to some embodiments.
Figure 2B is a block diagram illustrating an example computer system including a selection module according to some embodiments.
Figures 3A-3C depict a method for modifying a flight path for a drone to approach a selected vehicle based on BSM data that is received by the drone according to some embodiments.
Figures 4 and 5 are block diagrams illustrating an example of BSM data according to some embodiments.

### DETAILED DESCRIPTION

Embodiments of a drone assistance system that are operable to reduce or eliminate adjacent channel interference for V2X communications are now described. Examples of V2X communication include one or more of the following: DSRC (including BSMs, among other types of DSRC communication); LTE; millimeter wave communication; 3G; 4G; 5G LTE-Vehicle-to-Everything (LTE-V2X); LTE-Vehicle-to-Vehicle (LTE-V2V); LTE-Device-to-Device (LTE-D2D); Voice over LTE (VoLTE); etc.

In some embodiments, the connected vehicle that includes the drone assistance system is a DSRC-equipped vehicle. A DSRC-equipped vehicle is a vehicle which: (1) includes a DSRC radio; (2) includes a DSRC-compliant Global Positioning System (GPS) unit; and (3) is operable to lawfully send and receive DSRC messages in a jurisdiction where the DSRC-equipped vehicle is located. A DSRC radio is hardware that includes a DSRC receiver and a DSRC transmitter. The DSRC radio is operable to wirelessly send and receive DSRC messages. A DSRC-compliant GPS unit is operable to provide positional information for a vehicle (or some other DSRC-equipped device that includes the DSRC-compliant GPS unit) that has lane-level accuracy. The DSRC-compliant GPS unit is described in more detail below

A "DSRC-equipped" device is a processor-based device that includes a DSRC radio, a DSRC-compliant GPS unit and is operable to lawfully send and receive DSRC messages in a jurisdiction where the DSRC-equipped device is located. Various endpoints may be DSRC-equipped devices, including, for example, a roadside unit (RSU), a smartphone, a tablet computer and any other processor-based computing device that includes a DSRC radio and is operable to lawfully send and receive DSRC messages as described above.

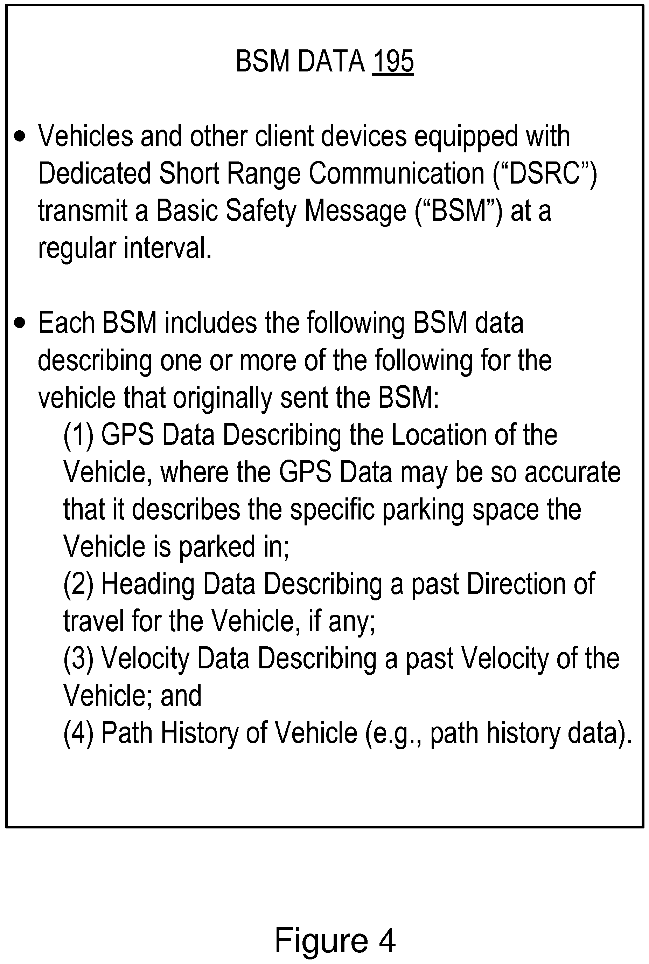

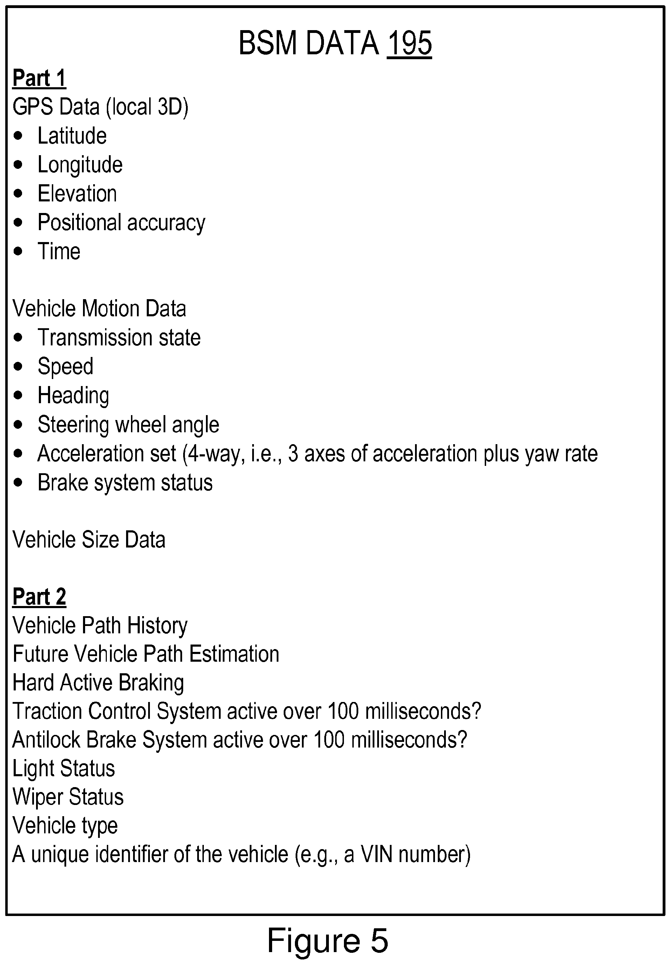

In some embodiments, an RSU that is a DSRC-equipped device does not include a DSRC-compliant GPS unit, but does include a non-transitory memory that stores digital data describing positional information for the RSU having lane-level accuracy, and the DSRC radio or some other system of the RSU inserts a copy of this digital data in the BSM data that is transmitted by the DSRC radio of the RSU. In this way, the RSU does not include a DSRC-compliant GPS unit but is still operable to distribute BSM data that satisfies the requirements for the DSRC standard. The BSM data is described in more detail below with reference to Figures 4 and 5 according to some embodiments.

A DSRC message is a wireless message that is specially configured to be sent and received by highly mobile devices such as vehicles, and is compliant with one or more of the following DSRC standards, including any derivative or fork thereof: EN 12253:2004 Dedicated Short-Range Communication - Physical layer using microwave at 5.8 GHz (review); EN 12795:2002 Dedicated Short-Range Communication (DSRC) - DSRC Data link layer: Medium Access and Logical Link Control (review); EN 12834:2002 Dedicated Short-Range Communication - Application layer (review); and EN 13372:2004 Dedicated Short-Range Communication (DSRC) - DSRC profiles for RTTT applications (review); EN ISO 14906:2004 Electronic Fee Collection - Application interface.

In the United States, Europe and Asia, DSRC messages are transmitted at 5.9 GHz. In the United States, DSRC messages are allocated 75 MHz of spectrum in the 5.9 GHz band. In Europe and Asia, DSRC messages are allocated 30 MHz of spectrum in the 5.9 GHz band. A wireless message, therefore, is not a DSRC message unless it operates in the 5.9 GHz band. A wireless message is also not a DSRC message unless it is transmitted by a DSRC transmitter of a DSRC radio.

Accordingly, a DSRC message is not any of the following: a WiFi message; a 3G message; a 4G message; an LTE message; a millimeter wave communication message; a Bluetooth message; a satellite communication; and a short-range radio message transmitted or broadcast by a key fob at 315 MHz or 433.92 MHz. For example, in the United States, key fobs for remote keyless systems include a short-range radio transmitter which operates at 315 MHz, and transmissions or broadcasts from this short-range radio transmitter are not DSRC messages since, for example, such transmissions or broadcasts do not comply with any DSRC standard, are not transmitted by a DSRC transmitter of a DSRC radio and are not transmitted at 5.9 GHz. In another example, in Europe and Asia, key fobs for remote keyless systems include a short-range radio transmitter which operates at 433.92 MHz, and transmissions or broadcasts from this short-range radio transmitter are not DSRC messages for similar reasons as those described above for remote keyless systems in the United States.

The wireless messages of key fobs made as a component of a remote keyless entry system are not DSRC messages for additional reasons. For example, the payload for a DSRC message is also required to include digital data describing a rich amount of vehicular data of various types of data. In general, a DSRC message always includes, at a minimum, a unique identifier of the vehicle which transmits the DSRC message as well as the GPS data for that vehicle. This amount of data requires a larger bandwidth than what is possible for other types of non-DSRC wireless messages. For example, Figures 4 and 5 depict examples of a permissible payload for a particular type of DSRC message referred to as a BSM message. The wireless messages of key fobs as a component of a remote keyless entry system are not DSRC messages because they do not include a payload which is permissible under the DSRC standard. For example, a key fob merely transmits a wireless message including a digital key which is known to a vehicle which is paired with the key fob; there is not sufficient bandwidth for other data to be included in the payload because the bandwidth allocated for these transmissions is very small. By comparison, DSRC messages are allocated large amounts of bandwidth and are required to include a far richer amount of data, including, for example, a unique identifier and the GPS data for the vehicle which transmitted the DSRC message.

In some embodiments, a DSRC-equipped vehicle does not include a conventional global positioning system unit ("GPS unit"), and instead includes a DSRC-compliant GPS unit. A conventional GPS unit provides positional information that describes a position of the conventional GPS unit with an accuracy of plus or minus 10 meters of the actual position of the conventional GPS unit. By comparison, a DSRC-compliant GPS unit provides GPS data that describes a position of the DSRC-compliant GPS unit with an accuracy of plus or minus 1.5 meters of the actual position of the DSRC-compliant GPS unit. This degree of accuracy is referred to as "lane-level accuracy" since, for example, a lane of a roadway is generally about 3 meters wide, and an accuracy of plus or minus 1.5 meters is sufficient to identify which lane a vehicle is traveling in on a roadway.

In some embodiments, a DSRC-compliant GPS unit is operable to identify, monitor and track its two-dimensional position within 1.5 meters of its actual position 68% of the time under an open sky.

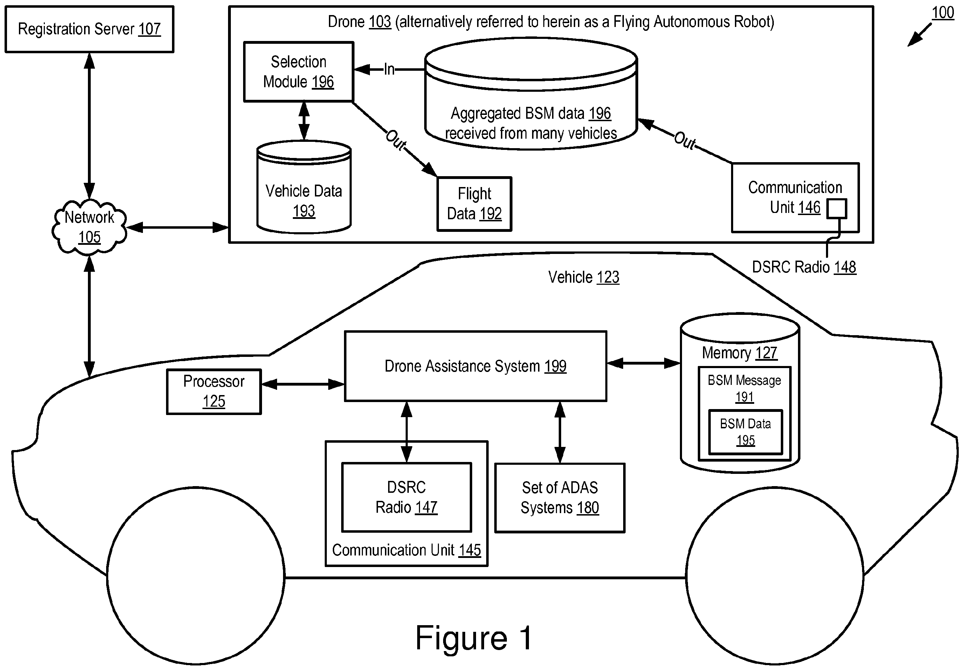

Referring to Figure 1, depicted is an operating environment 100 for a drone assistance system 199 according to some embodiments. As depicted, the operating environment 100 includes the following elements: a vehicle 123; a registration server 107; and a drone 103. These elements are communicatively coupled to one another by a network 105.

Although one vehicle 123, one registration server 107, one drone 103, and one network 105 are depicted in Figure 1, in practice the operating environment 100 may include one or more vehicles 123, one or more registration servers 107, one or more drones 103, and one or more networks 105.

The network 105 may be a conventional type, wired or wireless, and may have numerous different configurations including a star configuration, token ring configuration, or other configurations. Furthermore, the network 105 may include a local area network (LAN), a wide area network (WAN) (e.g., the Internet), or other interconnected data paths across which multiple devices and/or entities may communicate. In some embodiments, the network 105 may include a peer-to-peer network. The network 105 may also be coupled to or may include portions of a telecommunications network for sending data in a variety of different communication protocols. In some embodiments, the network 105 includes Bluetooth® communication networks or a cellular communications network for sending and receiving data including via short messaging service (SMS), multimedia messaging service (MMS), hypertext transfer protocol (HTTP), direct data connection, wireless application protocol (WAP), e-mail, DSRC, full-duplex wireless communication, mmWave, WiFi (infrastructure mode), WiFi (ad-hoc mode), visible light communication, TV white space communication and satellite communication. The network 105 may also include a mobile data network that may include 3G, 4G, LTE, LTE-V2V, LTE-V2X, LTE-D2D, VoLTE, LTE-5G or any other mobile data network or combination of mobile data networks. Further, the network 105 may include one or more IEEE 802.11 wireless networks. The network 105 may include any type of V2X network described herein.

The following are endpoints of the network 105: the vehicle 123; the registration server 107; and the drone 103.

The vehicle 123 is any type of connected vehicle. For example, the vehicle 123 is one of the following types of vehicles: a car; a truck; a sports utility vehicle; a bus; a semi-truck; a robotic car; a drone or any other roadway-based conveyance. In some embodiments, the vehicle 123 is a DSRC-equipped vehicle.

In some embodiments, the vehicle 123 is an autonomous vehicle or a semi-autonomous vehicle. For example, the vehicle 123 includes a set of Advanced Driver Assistance Systems 180 (a set of "ADAS systems 180") which provide autonomous features to the vehicle 123 which are sufficient to render the vehicle 123 an autonomous vehicle.

The National Highway Traffic Safety Administration ("NHTSA") has defined different "levels" of autonomous vehicles, e.g., Level 0, Level 1, Level 2, Level 3, Level 4 and Level 5. If an autonomous vehicle has a higher-level number than another autonomous vehicle (e.g., Level 3 is a higher-level number than Levels 2 or 1), then the autonomous vehicle with a higher-level number offers a greater combination and quantity of autonomous features relative to the vehicle with the lower level number. The different levels of autonomous vehicles are described briefly below.

Level 0: The set of ADAS systems 180 installed in a vehicle (e.g., the vehicle 123) have no vehicle control. The set of ADAS systems 180 may issue warnings to the driver of the vehicle. A vehicle which is Level 0 is not an autonomous or semi-autonomous vehicle.

Level 1: The driver must be ready to take driving control of the autonomous vehicle at any time. The set of ADAS systems 180 installed in the autonomous vehicle may provide autonomous features such as one or more of the following: Adaptive Cruise Control ("ACC"); and Parking Assistance with automated steering and Lane Keeping Assistance ("LKA") Type II, in any combination.

Level 2: The driver is obliged to detect objects and events in the roadway environment and respond if the set of ADAS systems 180 installed in the autonomous vehicle fail to respond properly (based on the driver's subjective judgement). The set of ADAS systems 180 installed in the autonomous vehicle executes accelerating, braking, and steering. The set of ADAS systems 180 installed in the autonomous vehicle can deactivate immediately upon takeover by the driver.

Level 3: Within known, limited environments (such as freeways), the driver can safely turn their attention away from driving tasks, but must still be prepared to take control of the autonomous vehicle when needed.

Level 4: The set of ADAS systems 180 installed in the autonomous vehicle can control the autonomous vehicle in all but a few environments such as severe weather. The driver must enable the automated system (which is comprised of the set of ADAS systems 180 installed in the vehicle 123) only when it is safe to do so. When the automated system is enabled, driver attention is not required for the autonomous vehicle to operate safely and consistent with accepted norms.

Level 5: Other than setting the destination and starting the system, no human intervention is required. The automated system can drive to any location where it is legal to drive and make its own decision (which may vary based on the jurisdiction where the vehicle is located).

A highly autonomous vehicle (HAV) is an autonomous vehicle that is Level 3 or higher.

Accordingly, in some embodiments the vehicle 123 is one of the following: a Level 1 autonomous vehicle; a Level 2 autonomous vehicle; a Level 3 autonomous vehicle; a Level 4 autonomous vehicle; a Level 5 autonomous vehicle; and an HAV.

The set of ADAS systems 180 may include one or more of the following types of ADAS systems: an ACC system; an adaptive high beam system; an adaptive light control system; an automatic parking system; an automotive night vision system; a blind spot monitor; a collision avoidance system; a crosswind stabilization system; a driver drowsiness detection system; a driver monitoring system; an emergency driver assistance system; a forward collision warning system; an intersection assistance system; an intelligent speed adaption system; a lane departure warning system (also referred to as a lane keep assistant); a pedestrian protection system; a traffic sign recognition system; a turning assistant; a wrong-way driving warning system; autopilot; sign recognition; and sign assist. Each of these example ADAS systems provide their own features and functionality that may be referred to herein as an "ADAS feature" or "ADAS functionality," respectively. The features and functionality provided by these example ADAS systems are also referred to herein as an "autonomous feature" or an "autonomous functionality," respectively.

In some embodiments, the vehicle 123 includes the following elements: a processor 125; a memory 127; a communication unit 145; the set of ADAS systems 180; and a drone assistance system 199.

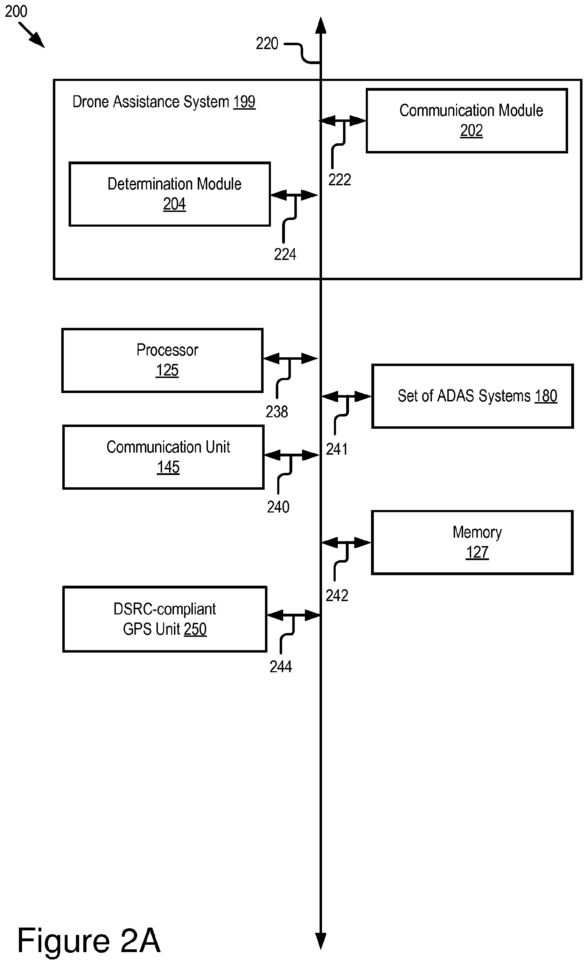

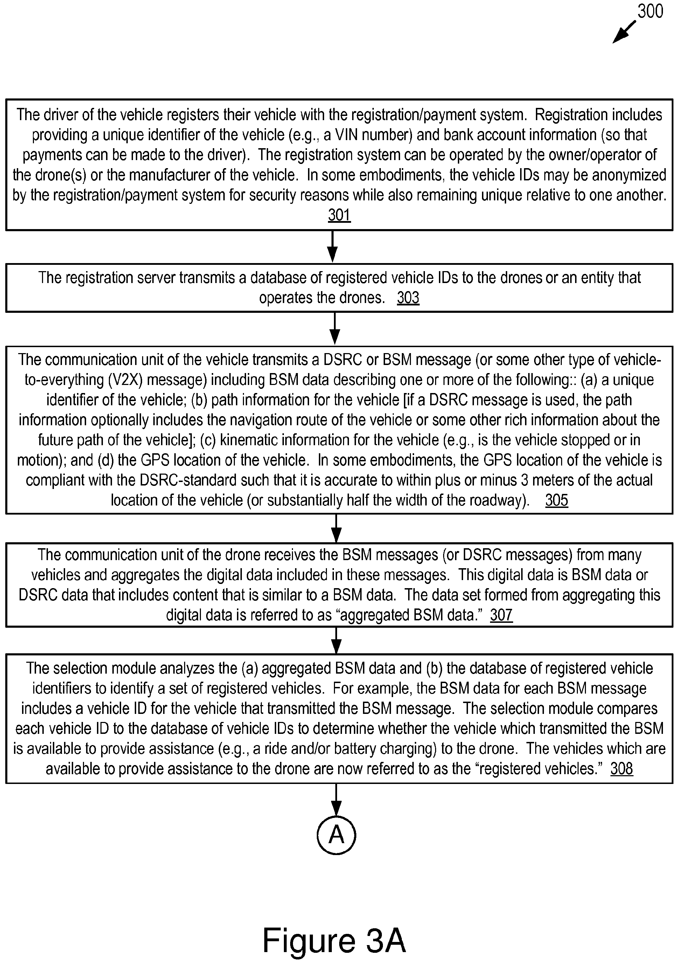

In some embodiments, the processor 125 and the memory 127 may be elements of an onboard vehicle computer system (such as computer system 200 described below with reference to Figure 2A). The onboard vehicle computer system may be operable to cause or control the operation of the drone assistance system 199 of the vehicle 123. The onboard vehicle computer system may be operable to access and execute the data stored on the memory 127 to provide the functionality described herein for the drone assistance system 199 of the vehicle 123 or its elements (see, e.g., Figure 2A). The onboard vehicle computer system may be operable to execute the drone assistance system 199 which causes the onboard vehicle computer system to execute one or more steps of one or more of the method 300 described below with reference to Figures 3A-3C.

In some embodiments, the processor 125 and the memory 127 may be elements of an onboard unit. The onboard unit includes an electronic control unit (herein "ECU") or an onboard vehicle computer system that may be operable to cause or control the operation of the drone assistance system 199. The onboard unit may be operable to access and execute the data stored on the memory 127 to provide the functionality described herein for the drone assistance system 199 or its elements. The onboard unit may be operable to execute the drone assistance system 199 which causes the onboard unit to execute one or more steps of one or more of the method 300 described below with reference to Figures 3A-3C. In some embodiments, the computer system 200 depicted in Figure 2A is an example of an onboard unit.

In some embodiments, the vehicle 123 may include a sensor set. The sensor set may include one or more sensors that are operable to measure the physical environment outside of the vehicle 123. For example, the sensor set may include one or more sensors that record one or more physical characteristics of the physical environment that is proximate to the vehicle 123. The memory 127 may store sensor data that describes the one or more physical characteristics recorded by the sensor set.

In some embodiments, the sensor set of the vehicle 123 may include one or more of the following vehicle sensors: a camera; a LIDAR sensor; a radar sensor; a laser altimeter; an infrared detector; a motion detector; a thermostat; a sound detector, a carbon monoxide sensor; a carbon dioxide sensor; an oxygen sensor; a mass air flow sensor; an engine coolant temperature sensor; a throttle position sensor; a crank shaft position sensor; an automobile engine sensor; a valve timer; an air-fuel ratio meter; a blind spot meter; a curb feeler; a defect detector; a Hall effect sensor, a manifold absolute pressure sensor; a parking sensor; a radar gun; a speedometer; a speed sensor; a tire-pressure monitoring sensor; a torque sensor; a transmission fluid temperature sensor; a turbine speed sensor (TSS); a variable reluctance sensor; a vehicle speed sensor (VSS); a water sensor; a wheel speed sensor; and any other type of automotive sensor.

The processor 125 includes an arithmetic logic unit, a microprocessor, a general-purpose controller, or some other processor array to perform computations and provide electronic display signals to a display device. The processor 125 processes data signals and may include various computing architectures including a complex instruction set computer (CISC) architecture, a reduced instruction set computer (RISC) architecture, or an architecture implementing a combination of instruction sets. The vehicle 123 may include one or more processors 125. Other processors, operating systems, sensors, displays, and physical configurations may be possible.

The memory 127 is a non-transitory memory that stores instructions or data that may be accessed and executed by the processor 125. The instructions or data may include code for performing the techniques described herein. The memory 127 may be a dynamic random-access memory (DRAM) device, a static random-access memory (SRAM) device, flash memory, or some other memory device. In some embodiments, the memory 127 also includes a non-volatile memory or similar permanent storage device and media including a hard disk drive, a floppy disk drive, a CD-ROM device, a DVD-ROM device, a DVD-RAM device, a DVD-RW device, a flash memory device, or some other mass storage device for storing information on a more permanent basis. A portion of the memory 127 may be reserved for use as a buffer or virtual random-access memory (virtual RAM). The vehicle 123 may include one or more memories 127.

In some embodiments, the memory 127 stores, as digital data, any data described herein. In some embodiments, the memory 127 stores any data that is necessary for the drone assistance system 199 to provide its functionality.

As depicted, the memory 127 stores a BSM message 191 that includes BSM data 195 as a payload. The BSM message 191 is a BSM message that is compliant with the DSRC standard. The BSM message 191 is generated by the drone assistance system 199. The BSM data 195 is described in more detail below with reference to Figures 4 and 5. The BSM data 195 includes digital data that describes, among other things, (a) whether the vehicle 123 is available to provide assistance to the drone 103 (e.g., a ride on the vehicle 123 which increases the flying range of the drone 103); (b) whether the vehicle 123 is currently in motion [a first example of "kinematic information"]; (c) the path, heading or (future) trajectory of the vehicle 123 [herein referred to as "vehicle future path data"]; and (d) GPS data describing a GPS location of the vehicle 123 [a second example of "kinematic information"].

The communication unit 145 transmits and receives data to and from a network 105 or to another communication channel. In some embodiments, the communication unit 145 may include a DSRC transceiver, a DSRC receiver and other hardware or software necessary to make the vehicle 123 a DSRC-equipped device.

In some embodiments, the communication unit 145 includes a port for direct physical connection to the network 105 or to another communication channel. For example, the communication unit 145 includes a USB, SD, CAT-5, or similar port for wired communication with the network 105. In some embodiments, the communication unit 145 includes a wireless transceiver for exchanging data with the network 105 or other communication channels using one or more wireless communication methods, including: IEEE 802.11; IEEE 802.16, BLUETOOTH®; EN ISO 14906:2004 Electronic Fee Collection - Application interface EN 11253:2004 Dedicated Short-Range Communication - Physical layer using microwave at 5.8 GHz (review); EN 12795:2002 Dedicated Short-Range Communication (DSRC) - DSRC Data link layer: Medium Access and Logical Link Control (review); EN 12834:2002 Dedicated Short-Range Communication - Application layer (review); EN 13372:2004 Dedicated Short-Range Communication (DSRC) - DSRC profiles for RTTT applications (review); the communication method described in U.S. Patent Application 14/471,387 filed on 08/28/2014 and entitled "Full-Duplex Coordination System"; or another suitable wireless communication method.

In some embodiments, the communication unit 145 includes a full-duplex coordination system as described in U.S. Patent Application 14/471,387 filed on 08/28/2014 and entitled "Full-Duplex Coordination System".

In some embodiments, the communication unit 145 includes a cellular communications transceiver for sending and receiving data over a cellular communications network including via short messaging service (SMS), multimedia messaging service (MMS), hypertext transfer protocol (HTTP), direct data connection, WAP, e-mail, or another suitable type of electronic communication. In some embodiments, the communication unit 145 includes a wired port and a wireless transceiver. The communication unit 145 also provides other conventional connections to the network 105 for distribution of files or media objects using standard network protocols including TCP/IP, HTTP, HTTPS, and SMTP, millimeter wave, DSRC, etc.

In some embodiments, the communication unit 145 includes a DSRC radio 147. In some embodiments, the DSRC radio 147 is an electronic device that includes a V2X transmitter and a V2X receiver that is operable to send and receive wireless messages via any V2X protocol. For example, the DSRC radio 147 is operable to send and receive wireless messages via DSRC. The V2X transmitter is operable to transmit and broadcast DSRC messages over the 5.9 GHz band. The V2X receiver is operable to receive DSRC messages over the 5.9 GHz band. The DSRC radio 147 includes seven channels (e.g., DSRC channel numbers 172, 174, 176, 178, 180, 182 and 184) with at least one of these channels reserved for sending and receiving BSMs (e.g., DSRC channel number 172 is reserved for BSM messages). In some embodiments, at least one of these channels is reserved for sending and receiving Pedestrian Safety Messages (PSMs) as described in U.S. Patent Application No. 15/796,296 filed on October 27, 2017 and entitled "PSM Message-based Device Discovery for a Vehicular Mesh Network". In some embodiments, DSRC channel number 172 is reserved for sending and receiving PSMs. In some embodiments, DSRC channel number 176 is reserved for sending and receiving PSMs.

In some embodiments, the DSRC radio 147 includes a non-transitory memory which stores digital data that controls the frequency for broadcasting BSM messages. In some embodiments, the non-transitory memory stores a buffered version of the GPS data for the vehicle 123 so that the GPS data for the vehicle 123 is broadcast as an element of the BSM messages (e.g., as an element of the BSM data 195) which are regularly broadcast by the DSRC radio 147.

In some embodiments, the DSRC radio 147 includes any hardware or software which is necessary to make the vehicle 123 compliant with the DSRC standards. In some embodiments, the DSRC-compliant GPS unit 250 depicted in Figure 2A is an element of the DSRC radio 147.

In some embodiments, the DSRC radio 147 includes a single channel that is dedicated to sending and/or receiving a particular type of wireless message. For example, the DSRC radio 147 includes a single channel that is dedicated to sending and receiving BSMs. In another example, the DSRC radio 147 includes a single channel that is dedicated to receiving PSMs.

In some embodiments, the drone assistance system 199 includes software that is operable, when executed by the processor 125, to cause the processor 125 to execute one or more steps of the method 300 described below with reference to Figures 3A-3C. The functionality of the drone assistance system 199 is described in more detail below according to some embodiments.

In some embodiments, the drone assistance system 199 is implemented using hardware including a field-programmable gate array ("FPGA") or an application-specific integrated circuit ("ASIC"). In some other embodiments, the drone assistance system 199 implemented using a combination of hardware and software.

The registration server 107 is a processor-based computing device. For example, the registration server 107 may include one or more of the following types of processor-based computing devices: a personal computer; a laptop; a mainframe; or any other processor-based computing device that is operable to function as a server. The registration server 107 may include a hardware server. The registration server 107 includes a registration system. The registration system includes code and routines that are operable, when executed by a processor of the registration server 107, to cause the processor to execute one or more of the steps of the method 300 described below with reference to Figures 3A-3C. For example, the registration system includes code and routines that are operable to cause the processor of the registration server 107 to execute the steps of the method 300 which are described below with reference to Figures 3A-3C as being executed by the registration server 107.

In some embodiments, registration server 107 is a server or collection of servers operated by the owner or operator of the drone 103. Optionally, a manufacturer of the vehicle 123 may operate the the registration server 107 to ensure security for financial transactions or to receive a percentage of each payment made by the registration server 107. These payments are an optional feature of the embodiments described herein.

In some embodiments, a driver of the vehicle 123 who wishes to participate in a drone assistance service in exchange for monetary payments from the owner or operator of the drone 103 uses their laptop or smartphone to register with the registration server 107. The driver provides their bank information and a unique identifier of the vehicle 123 (herein, a "vehicle ID" if singular or "vehicle IDs" if plural) to the registration server 107. Optionally, a dealership that sells or leases the vehicle 123 to the driver may assist the driver to complete registration with the registration server 107 at the time that the vehicle 123 is sold or leased. After registration, the vehicle 123 is available to assist the drone 103 by giving the drone 103 a "ride" on the roof (or in the trunk in case of a truck) of the vehicle 123 so that the vehicle 123 is available to increase the flying range of the drone 103.

In some embodiments, the registration server 107 includes a non-transitory memory such as the memory 127 that stores a data structure (e.g., a database) of each vehicle ID which is registered with the registration server 107. In some embodiments, the vehicle ID is digital data that describes a unique identifier of the vehicles that are registered with the registration server 107. An example of a unique identifier includes a Vehicle Identification Number (VIN).

In some embodiments, vehicle data 193 includes digital data that describes the vehicle ID for one or more vehicles (such as the vehicle 123) that are registered with the registration server 107. For example, the vehicle data 193 is digital data that describes the data structure of that includes the vehicle IDs registered with the registration server 107. In some embodiments, the registration server 107 provides the vehicle data 193 to the drone 103 via the network 105. The drone 103 includes a non-transitory memory (such as the memory 127) that stores the vehicle data 193.

The drone 103 is an autonomous flying robot. In some embodiments, the drone 103 is a package delivery drone. The drone 103 may be owned and operated by an entity that owns and operates the registration server 107 or a manufacturer of the vehicle 123.

In some embodiments, the drone 103 includes the following elements: a communication unit 146; aggregated BSM data 196; vehicle data 193; flight data 192; and a selection module 197.

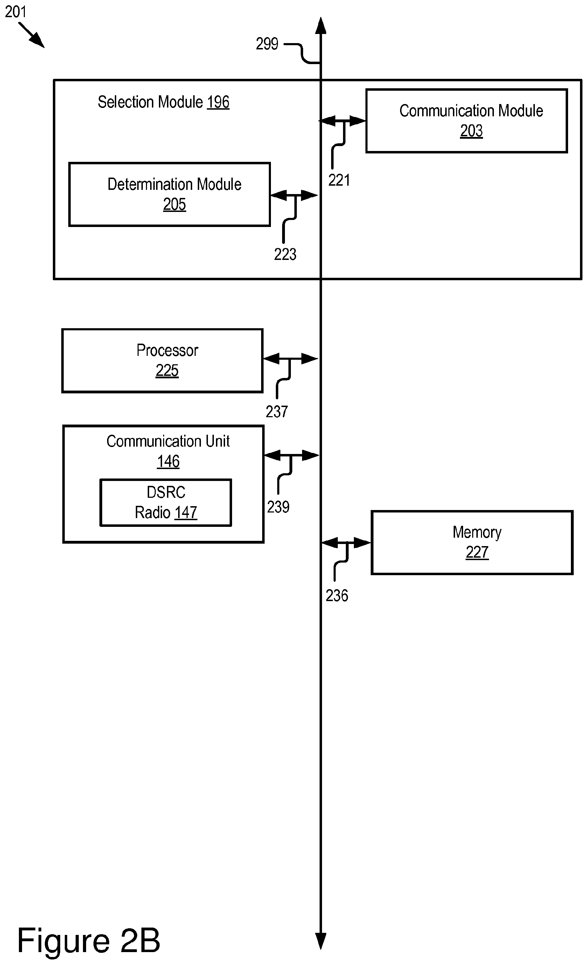

In some embodiments, the drone 103 also includes other elements as depicted in Figure 2B. For example, the drone 103 includes a processor 225 and a memory 227. The following elements may be stored in the memory 227: the aggregated BSM data 196; the vehicle data 193; the flight data 192; and the selection module 197. The processor 225 may be communicatively coupled to the memory 227 to access and execute the digital data stored therein. For example, the processor 225 is operable to access and execute the selection module 197 using the aggregated BSM data 196 and the vehicle data 193 as inputs to generate the flight data 192 as an output.

The communication unit 146 provides similar functionality as the communication unit 145, and so, that description will not be repeated here. The communication unit 146 includes a DSRC radio 148. The DSRC radio 148 provides similar functionality as the DSRC radio 147, and so, that description will not be repeated here.

In some embodiments, the DSRC radio 148 receives one or more BSM messages from one or more vehicles such as the ego vehicle 123. The DSRC radio 148 provides the BSM data from these BSM messages to the selection module 197. The selection module 197 builds the aggregated BSM data 196 using the BSM data received from the one or more vehicles. In some embodiments, the aggregated BSM data 196 includes the BSM data 195 received by the DSRC radio 148 from the vehicle 123.

The aggregated BSM data 196 includes a data structure that stores one or more instances of BSM data received from one or more vehicles such as the vehicle 123. In some embodiments, each instance of BSM data includes a unique identifier of the vehicle which transmitted the BSM message that included the BSM data as its payload. In some embodiments, the aggregated BSM data 196 is organized based on this unique identifier so that particular instances of BSM data are retrievable from the aggregated BSM data 196 based on the vehicle that is described by the BSM data.

The vehicle data 193 is digital data that describes the vehicle IDs for the vehicles that are registered with the registration server 107. Each of the vehicles whose vehicle ID is included in the vehicle data 193 is available to provide assistance to the drone 103. In this way, the vehicle data 193 describes vehicles which are available to provide assistance to the drone 103. These vehicles are sometimes referred to herein as "registered vehicles." In some embodiments, the selection module 197 includes code and routines that are operable, when executed by a processor of the drone 103, to cause the processor to select, based on the BSM data included in the aggregated BSM data 196, a vehicle from the registered vehicles to provide assistance to the drone 103. For example, the selection module 197 selects the vehicle 123 if the vehicle 123 is traveling in a direction that is consistent with the destination of the drone 103. The drone considers other factors as explained below. A registered vehicle which is selected by the selection module 197 may be referred to herein as a "selected vehicle."

The flight data 192 is digital data that describes one or more flight coordinates for the drone 103. In some embodiments, a flight data 192 describes a flight coordinate fly the drone 103 from its current geographic location to a GPS location of the selected vehicle as described by the BSM data that is provided by the selected vehicle.

In some embodiments, the selection module 197 includes code and routines that are operable, when executed by the processor of the drone 103, to cause the processor to execute one or more steps of the method 300 described below with reference to Figures 3A-3C.

In some embodiments, the selection module 197 includes software that aggregates the BSM data received from many different vehicles to form the aggregated BSM data 196 and then analyzes the aggregated BSM data 196 to: (1) select which vehicle the drone 103 will land on; and (2) determine how to approach the selected vehicle so that it is landed on smoothly and accurately by the drone 103.

An example of the analysis of the aggregated BSM data 196 performed by the selection module 197 is now described according to some embodiments.

At step 1, the BSM data for each BSM message includes a vehicle ID for the vehicle that transmitted the BSM message. The selection module 197 compares each vehicle ID to the vehicle data 193 to determine whether the vehicle which transmitted the BSM is available to provide assistance to (e.g., a ride and/or battery charging) to the drone. The vehicles which are available to provide assistance to the drone may be referred to as the "registered vehicles."

At step 2, the BSM data for each BSM message also includes path information for the vehicle that transmitted the BSM message. This path information indicates the heading or trajectory of the vehicle as an indication of whether the vehicle is heading in the same general direction as the delivery destination of the drone 103. The selection module 197 analyzes the BSM data for only the registered vehicles (since only the registered vehicles are available to provide assistance to the drone 103) and identifies a group of vehicles which are headed in the direction that is consistent with the delivery destination for a package being carried by the drone 103. The group of vehicles that are heading in a direction that is consistent with the delivery location for the package may be referred to as "consistent vehicles."

At step 3, the BSM data for each BSM message also includes kinematic information for the vehicle that transmitted the BSM message. The selection module 197 analyzes the BSM data for the consistent vehicles to determine whether any of these vehicles are currently stopped or parked. In some embodiments, the drone 103 is able to land on moving vehicles but prefers to land on stopped or parked vehicles. Accordingly, in some embodiments when selecting a vehicle to land on, the selection module 197 selects a stopped/parked vehicle from the group of consistent vehicles instead of a vehicle that is currently in motion.

Steps 1 and 2 described above beneficially ensure that the selection module 197 selects a registered vehicle which is heading in the same direction as the delivery destination of the drone 103. Step 3 beneficially favors stopped vehicles over vehicles that are in motion. In this way the selection module 197 selects the vehicle which is best suited for the drone 103. The selection module 197 then generates flight coordinates for landing on the selected vehicle. The flight coordinates may be based upon the GPS data that is included in the BSM data for the selected vehicle so that the drone 103 includes digital data describing the location of the selected vehicle (and where to land). In some embodiments, the selected vehicle is the vehicle 123. In some embodiments, the drone 103 includes any sensors that are necessary to aide it in landing on the selected vehicle. Examples of such sensors are described above with reference to the vehicle 123 according to some embodiments.

In some embodiments, the selection module 197 includes code and routines that are operable, when executed by the processor of the drone, to cause the processor to notify the registration server 107 of each ride on a selected vehicle. The registration server 107 includes code and routines that are operable to make a financial payment from the owner/operator of the drone 103 to a bank account of a driver of the selected vehicle in exchange for each ride provided by the selected vehicle. In some embodiments, a manufacturer of the selected vehicle (e.g., a manufacturer of the vehicle 123) receives a percentage of each payment made to the driver or other financial payments from the owner/operator of the drone 103 in exchange for making vehicles they manufacture eligible for providing assistance to the drone 103.

In some embodiments, the drone assistance system 199 includes software that is operable, when executed by the processor 125, to cause the processor 125 to generate and broadcast BSM messages 191 (or other DSRC messages) for the vehicle 123. The BSM messages 191 include the BSM data 195. The BSM data 195 includes digital data that describes, among other things: a unique identifier of the vehicle 123; path/trajectory/heading information for the vehicle 123; kinematic data that indicates whether the vehicle 123 is currently stationary or moving (e.g., whether the brakes of the vehicle 123 are engaged); and GPS data describing GPS coordinates (i.e., a GPS location) of the vehicle 123 so that the drone 103 is able to determine where to go to land on the vehicle 123.

In some embodiments, the drone assistance system 199 may transmit customized DSRC messages instead of BSM messages. The drone assistance system 199 includes code and routine that are operable, when executed by the processor 125, to cause the processor 125 to include digital data in the customized DSRC message that describes the navigation route of the vehicle 123. This navigation route data would better assist the selection module 197 to identify vehicles that are traveling in a direction that is consistent with the delivery destination for the drone 103 since it is more precise than the standard path information that is included in all BSM messages. Accordingly, customized DSRC messages include digital data that further assists the selection module 197 to identify vehicles that are heading in a direction that is consistent with the delivery destination of the drone 103.

In some embodiments, the drone assistance system also detects when a drone is landed on the vehicle 123. In some embodiments, the drone assistance system 199 may notify the registration server 107 of each drone landing (e.g., the drone 103 may provide a unique identifier of the drone upon landing) and the miles traveled by the drone 103. In this way, the payment provided to the driver of the vehicle 123 may be based on mileage instead of being a flat fee or some other payment that is not based on mileage. In some embodiments, the drone 103 includes sensors that are operable to detect mileage traveled on the vehicle 123.

### Example Computer System

Referring now to Figure 2A, depicted is a block diagram illustrating an example computer system 200 including the drone assistance system 199 according to some embodiments. In some embodiments, the computer system 200 may include a special-purpose computer system that is programmed to perform one or more steps of one or more of the method 300 described below with reference to Figures 3A-3C. In some embodiments, the computer system 200 is an onboard vehicle computer of the vehicle 123. In some embodiments, the computer system 200 is an onboard unit of the vehicle 123. In some embodiments, the computer system 200 is an electronic control unit (ECU), head unit or some other processor-based computing device of the vehicle 123.

The computer system 200 includes one or more of the following elements according to some examples: the drone assistance system 199; the processor 125; the communication unit 145; the memory 127; the set of ADAS systems 180; and a DSRC-compliant GPS unit 250. The components of the computer system 200 are communicatively coupled by a bus 220.

In the illustrated embodiment, the processor 125 is communicatively coupled to the bus 220 via a signal line 238. The communication unit 145 is communicatively coupled to the bus 220 via a signal line 240. The memory 127 is communicatively coupled to the bus 220 via a signal line 242. The set of ADAS systems 180 is communicatively coupled to the bus 220 via a signal line 241. The DSRC-compliant GPS unit 250 is communicatively coupled to the bus 220 via a signal line 244.

The following elements were described above with reference to Figure 1, and so, those descriptions will not be repeated here: the processor 125; the communication unit 145; the memory 127; and the set of ADAS systems 180.

The memory 127 may store any of the data described above with reference to Figure 1 or below with reference to Figures 2-5. The memory 127 may store any data needed for the computer system 200 to provide its functionality.

In some embodiments, the DSRC-compliant GPS unit 250 includes any hardware and software necessary to make the vehicle 123, computer system 200, or the DSRC-compliant GPS unit 250 compliant with one or more of the following DSRC standards, including any derivative or fork thereof: EN 12253:2004 Dedicated Short-Range Communication - Physical layer using microwave at 5.8 GHz (review); EN 12795:2002 Dedicated Short-Range Communication (DSRC) - DSRC Data link layer: Medium Access and Logical Link Control (review); EN 12834:2002 Dedicated Short-Range Communication - Application layer (review); and EN 13372:2004 Dedicated Short-Range Communication (DSRC) - DSRC profiles for RTTT applications (review); EN ISO 14906:2004 Electronic Fee Collection - Application interface.

In some embodiments, the DSRC-compliant GPS unit 250 is operable to provide GPS data describing the location of the vehicle 123 with lane-level accuracy. For example, the vehicle 123 is traveling in a lane of a roadway. Lane-level accuracy means that the location of the vehicle 123 is described by the GPS data so accurately that the lane of travel of the vehicle 123 within the roadway may be accurately determined based on the GPS data for this vehicle 123 as provided by the DSRC-compliant GPS unit 250. In some embodiments, the GPS data is an element of the BSM data 195 (see, e.g., Figures 4 and 5).

In some embodiments, the DSRC-compliant GPS unit 250 includes hardware that wirelessly communicates with a GPS satellite to retrieve GPS data that describes the geographic location of the vehicle 123 with a precision that is compliant with the DSRC standard. The DSRC standard requires that GPS data be precise enough to infer if two vehicles (one of which is, for example, the vehicle 123) are located in adjacent lanes of travel. In some embodiments, the DSRC-compliant GPS unit 250 is operable to identify, monitor and track its two-dimensional position within 1.5 meters of its actual position 68% of the time under an open sky. Since driving lanes are typically no less than 3 meters wide, whenever the two-dimensional error of the GPS data is less than 1.5 meters the drone assistance system 199 described herein may analyze the GPS data provided by the DSRC-compliant GPS unit 250 and determine what lane the vehicle 123 is traveling in based on the relative positions of two or more different vehicles (one of which is, for example, the vehicle 123) traveling on the roadway at the same time.

By comparison to the DSRC-compliant GPS unit 250, a conventional GPS unit which is not compliant with the DSRC standard is unable to determine the location of a vehicle 123 with lane-level accuracy. For example, a typical roadway lane is approximately 3 meters wide. However, a conventional GPS unit only has an accuracy of plus or minus 10 meters relative to the actual location of the vehicle 123. As a result, such conventional GPS units are not sufficiently accurate to identify a lane of travel for a vehicle 123 based on GPS data alone; instead, systems having only conventional GPS units must utilize sensors such as cameras to identify the lane of travel of the vehicle 123. Identifying a lane of travel of a vehicle 123 is beneficial, for example, because in some embodiments it may enable drone 103 to more accurately identify the location of the vehicle 123 and smoothly land on the vehicle 123.

In the illustrated embodiment shown in Figure 2A, the drone assistance system 199 includes: a communication module 202; and a determination module 204.

The communication module 202 can be software including routines for handling communications between the drone assistance system 199 and other components of the operating environment 100 of Figure 1.

In some embodiments, the communication module 202 can be a set of instructions executable by the processor 125 to provide the functionality described below for handling communications between the drone assistance system 199 and other components of the computer system 200. In some embodiments, the communication module 202 can be stored in the memory 127 of the computer system 200 and can be accessible and executable by the processor 125. The communication module 202 may be adapted for cooperation and communication with the processor 125 and other components of the computer system 200 via signal line 222.

The communication module 202 sends and receives data, via the communication unit 145, to and from one or more elements of the operating environment 100. For example, the communication module 202 receives or transmits, via the communication unit 145, some or all of the digital data stored on the memory 127. The communication module 202 may send or receive any of the digital data or messages described above with reference to Figure 1 or below with reference to Figures 2-5, via the communication unit 145.

In some embodiments, the communication module 202 receives data from components of the drone assistance system 199 and stores the data in the memory 127 (or a buffer or cache of the memory 127, or a standalone buffer or cache which is not depicted in Figure 2A). For example, the communication module 202 broadcasts a BSM message including the BSM data 195 from the communication unit 145 at a regular interval such as once every 0.1 seconds.

In some embodiments, the communication module 202 may handle communications between components of the drone assistance system 199. For example, the communication module 202 transmits the GPS data from the memory 127 to the determination module 204 so that the determination module 204 is able to form BSM data 195 including the GPS data as an element of the BSM data 195.

In some embodiments, the determination module 204 can be a set of instructions executable by the processor 125 which are operable, when executed by the processor 125, to cause the processor 125 to execute one or more steps of the method 300 described below with reference to Figures 3A-3C. In some embodiments, the determination module 204 can be stored in the memory 127 of the computer system 200 and can be accessible and executable by the processor 125. The determination module 204 may be adapted for cooperation and communication with the processor 125 and other components of the computer system 200 via signal line 224.

Referring now to Figure 2B, depicted is a block diagram illustrating an example computer system 201 including the selection module 197 according to some embodiments. In some embodiments, the computer system 201 may include a special-purpose computer system that is programmed to perform one or more steps of one or more of the method 300 described below with reference to Figures 3A-3C. In some embodiments, the computer system 200 is an onboard computer of the drone 103.

The computer system 200 includes one or more of the following elements according to some examples: the selection module 197; the processor 225; the communication unit 146; and the memory 227. The components of the computer system 200 are communicatively coupled by a bus 299.

In the illustrated embodiment, the processor 225 is communicatively coupled to the bus 299 via a signal line 237. The communication unit 146 is communicatively coupled to the bus 299 via a signal line 239. The memory 127 is communicatively coupled to the bus 299 via a signal line 236.

The following elements were described above with reference to Figure 1, and so, those descriptions will not be repeated here: the communication unit 146; and the DSRC radio 147 included in the communication unit 146.

The memory 227 may store any of the data described above with reference to Figure 1 or below with reference to Figures 2-5. The memory 227 may store any data needed for the computer system 201 to provide its functionality.

In the illustrated embodiment shown in Figure 2b, the selection module 197 includes: a communication module 203; and a determination module 205.

The communication module 203 can be software including routines for handling communications between the selection module 197 and other components of the operating environment 100 of Figure 1.

In some embodiments, the communication module 203 can be a set of instructions executable by the processor 225 to provide the functionality described below for handling communications between the selection module 197 and other components of the computer system 201. In some embodiments, the communication module 203 can be stored in the memory 227 of the computer system 201 and can be accessible and executable by the processor 225. The communication module 203 may be adapted for cooperation and communication with the processor 225 and other components of the computer system 201 via signal line 221.

The communication module 203 sends and receives data, via the communication unit 146, to and from one or more elements of the operating environment 100. For example, the communication module 203 receives or transmits, via the communication unit 146, some or all of the digital data stored on the memory 127. The communication module 203 may send or receive any of the digital data or messages described above with reference to Figure 1 or below with reference to Figures 2-5, via the communication unit 146.

In some embodiments, the communication module 203 receives data from components of the selection module 197 and stores the data in the memory 227 (or a buffer or cache of the memory 227, or a standalone buffer or cache which is not depicted in Figure 2B). For example, the communication module 203 receives the BSM data 195 from the communication unit 146 and stores the BSM data 195 in the memory 227 to form the aggregated BSM data 196.

In some embodiments, the communication module 203 may handle communications between components of the selection module 197. For example, the communication module 203 transmits vehicle data 193 to the determination module 205.

In some embodiments, the determination module 205 can be a set of instructions executable by the processor 225 which are operable, when executed by the processor 225, to cause the processor 225 to execute one or more steps of the method 300 described below with reference to Figures 3A-3C. In some embodiments, the determination module 205 can be stored in the memory 227 of the computer system 201 and can be accessible and executable by the processor 225. The determination module 204 may be adapted for cooperation and communication with the processor 225 and other components of the computer system 201 via signal line 223.

### Example Processes

Figures 3A-3C depict a method 300 for modifying a flight path for a drone to approach a selected vehicle based on BSM data that is received by the drone according to some embodiments. The steps of the method 300 are executable in any order, and not necessarily the order depicted in Figures 3A-3C.

At step 301, the driver of the vehicle registers their vehicle with the registration/payment system. Registration includes providing a unique identifier of the vehicle (e.g., a VIN number) and bank account information (so that payments can be made to the driver). The registration system can be operated by the owner/operator of the drone(s) or the manufacturer of the vehicle. In some embodiments, the vehicle IDs may be anonymized by the registration/payment system for security reasons while also remaining unique relative to one another.

At step 303, the registration server transmits a database of registered vehicle IDs to the drones or an entity that operates the drones.

At step 305, the communication unit of the vehicle transmits a DSRC or BSM message (or some other type of vehicle-to-everything (V2X) message) including BSM data describing one or more of the following:: (a) a unique identifier of the vehicle; (b) path information for the vehicle [if a DSRC message is used, the path information optionally includes the navigation route of the vehicle or some other rich information about the future path of the vehicle]; (c) kinematic information for the vehicle (e.g., is the vehicle stopped or in motion); and (d) the GPS location of the vehicle. In some embodiments, the GPS location of the vehicle is compliant with the DSRC-standard such that it is accurate to within plus or minus 3 meters of the actual location of the vehicle (or substantially half the width of the roadway).

At step 307, the communication unit of the drone receives the BSM messages (or DSRC messages) from many vehicles and aggregates the digital data included in these messages. This digital data is BSM data or DSRC data that includes content that is similar to a BSM data. The data set formed from aggregating this digital data is referred to as "aggregated BSM data."

At step 308, the selection module analyzes the (a) aggregated BSM data and (b) the database of registered vehicle identifiers to identify a set of registered vehicles. For example, the BSM data for each BSM message includes a vehicle ID for the vehicle that transmitted the BSM message. The selection module compares each vehicle ID to the database of vehicle IDs to determine whether the vehicle which transmitted the BSM is available to provide assistance (e.g., a ride and/or battery charging) to the drone. The vehicles which are available to provide assistance to the drone are now referred to as the "registered vehicles."

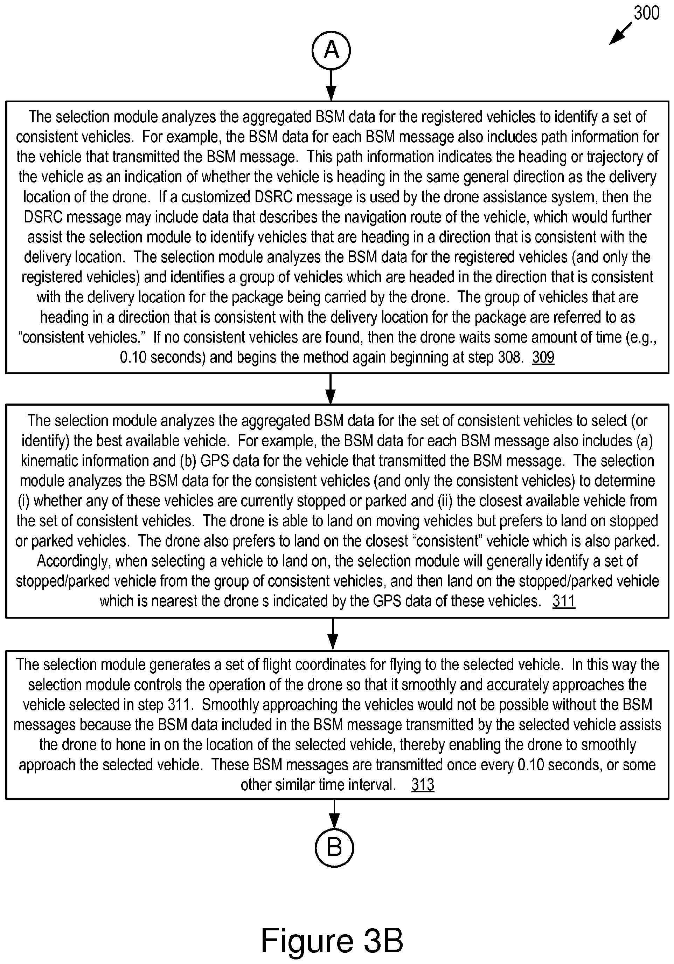

Referring now to Figure 3B, at step 309 the selection module analyzes the aggregated BSM data for the registered vehicles to identify a set of consistent vehicles. For example, the BSM data for each BSM message also includes path information for the vehicle that transmitted the BSM message. This path information indicates the heading or trajectory of the vehicle as an indication of whether the vehicle is heading in the same general direction as the delivery location of the drone. If a customized DSRC message is used by the drone assistance system, then the DSRC message may include data that describes the navigation route of the vehicle, which would further assist the selection module to identify vehicles that are heading in a direction that is consistent with the delivery location. The selection module analyzes the BSM data for the registered vehicles (and only the registered vehicles) and identifies a group of vehicles which are headed in the direction that is consistent with the delivery location for the package being carried by the drone. The group of vehicles that are heading in a direction that is consistent with the delivery location for the package are referred to as "consistent vehicles." If no consistent vehicles are found, then the drone waits some amount of time (e.g., 0.1 seconds) and begins the method again beginning at step 308.

At step 311, the selection module analyzes the aggregated BSM data for the set of consistent vehicles to select (or identify) the best available vehicle. For example, the BSM data for each BSM message also includes (a) kinematic information and (b) GPS data for the vehicle that transmitted the BSM message. The selection module analyzes the BSM data for the consistent vehicles (and only the consistent vehicles) to determine (1) whether any of these vehicles are currently stopped or parked and (2) the closest available vehicle from the set of consistent vehicles. The drone is able to land on moving vehicles but prefers to land on stopped or parked vehicles. The drone also prefers to land on the closest "consistent" vehicle which is also parked. Accordingly, when selecting a vehicle to land on, the selection module will generally identify a set of stopped/parked vehicle from the group of consistent vehicles, and then land on the stopped/parked vehicle which is nearest the drone s indicated by the GPS data of these vehicles.

At step 313, the selection module generates a set of flight coordinates for flying to the selected vehicle. In this way the selection module controls the operation of the drone so that it smoothly and accurately approaches the vehicle selected in step 311. Smoothly approaching the vehicles would not be possible without the BSM messages because the BSM data included in the BSM message transmitted by the selected vehicle assists the drone to hone in on the location of the selected vehicle, thereby enabling the drone to smoothly approach the selected vehicle. These BSM messages are transmitted once every 0.1 seconds, or some other similar time interval.

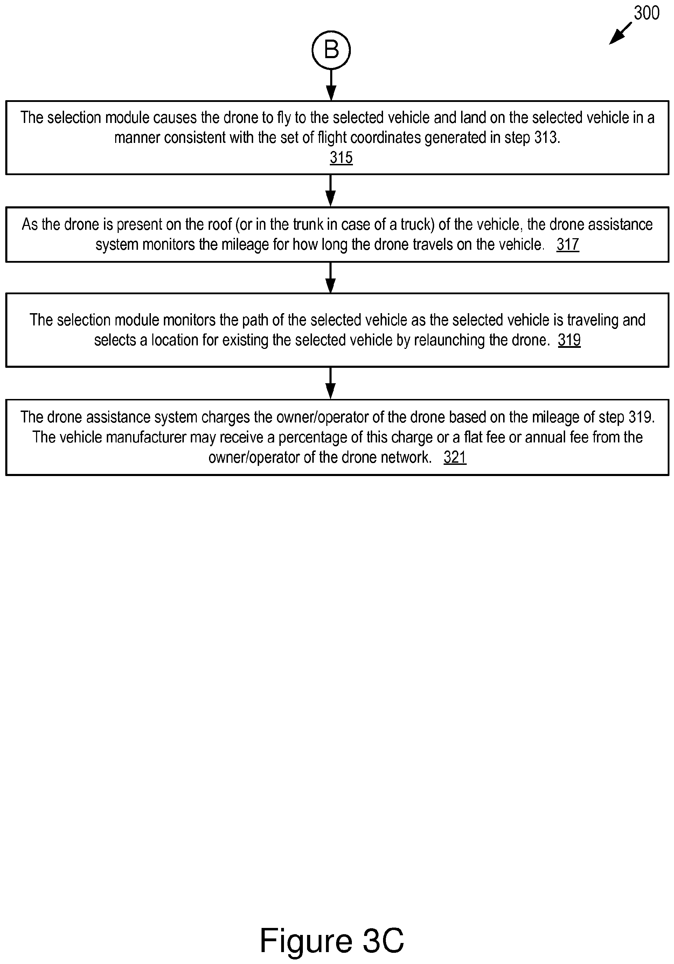

Referring now to Figure 3C, at step 315 the selection module causes the drone to fly to the selected vehicle and land on the selected vehicle in a manner consistent with the set of flight coordinates generated in step 313.

At step 317, as the drone is present on the roof (or in the trunk in case of a truck) of the vehicle, the drone assistance system monitors the mileage for how long the drone travels on the vehicle.

At step 319, the selection module monitors the path of the selected vehicle as the selected vehicle is traveling and selects a location for existing the selected vehicle by relaunching the drone.

At step 321, the drone assistance system charges the owner/operator of the drone based on the mileage of step 319. The vehicle manufacturer may receive a percentage of this charge or a flat fee or annual fee from the owner/operator of the drone network.

Referring now to Figure 4, depicted is a block diagram illustrating an example of the BSM data 195 according to some embodiments.

The regular interval for transmitting BSMs may be user configurable. In some embodiments, a default setting for this interval may be transmitting the BSM every 0.1 seconds or substantially every 0.1 seconds.

A BSM is broadcasted over the 5.9 GHz DSRC band. DSRC range may be substantially 1,000 meters. In some embodiments, DSRC range may include a range of substantially 100 meters to substantially 1,000 meters. DSRC range is generally 300 to 500 meters depending on variables such as topography and occlusions between DSRC-equipped endpoints.

Referring now to Figure 5, depicted is a block diagram illustrating an example of BSM data 195 according to some embodiments.

A BSM may include two parts. These two parts may include different BSM data 195 as shown in Figure 5.

Part 1 of the BSM data 195 may describe one or more of the following: the GPS data of the vehicle; vehicle heading; vehicle speed; vehicle acceleration; vehicle steering wheel angle; and vehicle size.

Part 2 of the BSM data 195 may include a variable set of data elements drawn from a list of optional elements. Some of the BSM data 195 included in Part 2 of the BSM are selected based on event triggers, e.g., anti-locking brake system ("ABS") being activated may trigger BSM data 195 relevant to the ABS system of the vehicle.

In some embodiments, some of the elements of Part 2 are transmitted less frequently in order to conserve bandwidth.

In some embodiments, the BSM data 195 included in a BSM includes current snapshots of a vehicle.

In the above description, for purposes of explanation, numerous specific details are set forth in order to provide a thorough understanding of the specification. It will be apparent, however, to one skilled in the art that the disclosure can be practiced without these specific details. In some instances, structures and devices are shown in block diagram form in order to avoid obscuring the description. For example, the present embodiments can be described above primarily with reference to user interfaces and particular hardware. However, the present embodiments can apply to any type of computer system that can receive data and commands, and any peripheral devices providing services.

Reference in the specification to "some embodiments" or "some instances" means that a particular feature, structure, or characteristic described in connection with the embodiments or instances can be included in at least one embodiment of the description. The appearances of the phrase "in some embodiments" in various places in the specification are not necessarily all referring to the same embodiments.

Some portions of the detailed descriptions that follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms including "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission, or display devices.

The present embodiments of the specification can also relate to an apparatus for performing the operations herein. This apparatus may be specially constructed for the required purposes, or it may include a general-purpose computer selectively activated or reconfigured by a computer program stored in the computer. Such a computer program may be stored in a computer-readable storage medium, including, but is not limited to, any type of disk including floppy disks, optical disks, CD-ROMs, and magnetic disks, read-only memories (ROMs), random access memories (RAMs), EPROMs, EEPROMs, magnetic or optical cards, flash memories including USB keys with non-volatile memory, or any type of media suitable for storing electronic instructions, each coupled to a computer system bus.

The specification can take the form of some entirely hardware embodiments, some entirely software embodiments or some embodiments containing both hardware and software elements. In some preferred embodiments, the specification is implemented in software, which includes, but is not limited to, firmware, resident software, microcode, etc.

Furthermore, the description can take the form of a computer program product accessible from a computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

A data processing system suitable for storing or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including, but not limited, to keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modem, and Ethernet cards are just a few of the currently available types of network adapters.

Finally, the algorithms and displays presented herein are not inherently related to any particular computer or other apparatus. Various general-purpose systems may be used with programs in accordance with the teachings herein, or it may prove convenient to construct more specialized apparatus to perform the required method steps. The required structure for a variety of these systems will appear from the description below. In addition, the specification is not described with reference to any particular programming language. It will be appreciated that a variety of programming languages may be used to implement the teachings of the specification as described herein.

The foregoing description of the embodiments of the specification has been presented for the purposes of illustration and description. The aforementioned embodiments are meant to be examples useful for understanding the invention, which is defined by the appended claims. The particular naming and division of the modules, routines, features, attributes, methodologies, and other aspects are not mandatory or significant, and the mechanisms that implement the specification or its features may have different names, divisions, or formats. Furthermore, as will be apparent to one of ordinary skill in the relevant art, the modules, routines, features, attributes, methodologies, and other aspects of the disclosure can be implemented as software, hardware, firmware, or any combination of the three. Also, wherever a component, an example of which is a module, of the specification is implemented as software, the component can be implemented as a standalone program, as part of a larger program, as a plurality of separate programs, as a statically or dynamically linked library, as a kernel-loadable module, as a device driver, or in every and any other way known now or in the future to those of ordinary skill in the art of computer programming. Additionally, the disclosure is in no way limited to embodiment in any specific programming language, or for any specific operating system or environment. Accordingly, the disclosure is intended to be illustrative, but not limiting, of the scope of the specification, which is set forth in the following claims.

## Claims

1. A method comprising:
receiving (307), by a flying autonomous robot, Vehicle-to-Everything, V2X, messages including digital data describing path information for a set of vehicles indicating a heading or trajectory of each vehicle of the set of vehicles as an indication of whether the vehicle is heading in a same general direction as the flying autonomous robot, kinematic data describing whether the set of vehicles are currently stationary or not currently in motion, whether the vehicles of the set of vehicles are capable of providing assistance to the flying autonomous robot, and GPS data describing GPS coordinates of the set of vehicles, wherein the flying autonomous robot includes a V2X radio that receives the V2X message;
selecting (311), by the flying autonomous robot, a vehicle to land on from the set of vehicles based on the path data and the kinematic data for the vehicle indicating that a brake for the vehicle is engaged;
modifying (313), by the flying autonomous robot, a flight path of the flying autonomous robot based on the digital data so that the flight path approaches the vehicle; and
landing (315) the flying autonomous robot on the vehicle while the vehicle is not currently in motion.

2. The method of claim 1, further comprising:
determining that the vehicle is headed in a direction that is consistent with a destination location of the flying autonomous robot.

3. The method of claim 2, wherein the destination location of the flying autonomous robot is a delivery location and the vehicle is determined to be headed in the direction that is consistent with the delivery location of the flying autonomous robot.

4. The method of claim 1, further comprising making a financial payment from an owner of the flying autonomous robot to a bank account associated with a registered driver of the vehicle as compensation for giving the flying autonomous robot a ride.

5. The method of claim 4, further comprising receiving a notification of a number of miles traveled by the flying autonomous robot, wherein the financial payment is based on the number of miles traveled by the flying autonomous robot.

6. The method of claim 1, wherein the V2X messages include a Basic Safety Message.

7. The method of any of claims 1-6, wherein the digital data describes a location of a GPS unit equipped to the vehicle with an accuracy of plus or minus 1.5 meters of the actual position of the GPS unit equipped to the vehicle.

8. A system (200) comprising:
a processor (225) of a flying autonomous robot that is operable to receive (307) Vehicle-to-Everything, V2X, messages including digital data describing path information for a set of vehicles indicating a heading or trajectory of each vehicle of the set of vehicles as an indication of whether the vehicle is heading in a same general direction as the flying autonomous robot, kinematic data describing whether the set of vehicles are currently stationary or not currently in motion, whether the vehicles of the set of vehicles are capable of providing assistance to the flying autonomous robot, and GPS data describing GPS coordinates of the set of vehicles, wherein the flying autonomous robot includes a V2X radio that receives the V2X message; and
a non-transitory memory (227) communicatively coupled to the processor, wherein the non-transitory memory stores computer code that is operable, when executed by the processor, to cause the processor to select (311) a vehicle to land on from the set of vehicles based on the path data and the kinematic data for the vehicle indicating that a brake for the vehicle is engaged, modify (313) a flight path of the flying autonomous robot based on the digital data so that the flight path approaches the vehicle, and land (315) the flying autonomous robot on the vehicle while the vehicle is not currently in motion.

9. The system of claim 8, wherein the computer code is further operable to determine that the vehicle is headed in a direction that is consistent with a destination location of the flying autonomous robot.

10. The system of claim 9, wherein the destination location of the flying autonomous robot is a delivery location and the vehicle is determined to be headed in the direction that is consistent with the delivery location of the flying autonomous robot.

11. The system of claim 8, wherein the V2X messages include a Basic Safety Message.

12. The system of any of claims 8-11, wherein the digital data describes a location of a GPS unit equipped to the vehicle with an accuracy of plus or minus 1.5 meters of the actual position of the GPS unit equipped to the vehicle.

13. A computer program product comprising a processor (225) with instructions that, when executed, causes the processor to perform operations comprising:
receiving (307) Vehicle-to-Everything, V2X, messages including digital data describing path information for a set of vehicles, kinematic data describing whether the set of vehicles are currently stationary or not currently in motion indicating a heading or trajectory of each vehicle of the set of vehicles as an indication of whether the vehicle is heading in a same general direction as the flying autonomous robot, whether the vehicles of the set of vehicles are capable of providing assistance to the flying autonomous robot, and GPS data describing GPS coordinates of the set of vehicles, wherein the flying autonomous robot includes a V2X radio that receives the V2X message;
selecting (311) a vehicle to land on from the set of vehicles based on the path data and the kinematic data for the vehicle indicating that a brake for the vehicle is engaged;
modifying (313) a flight path of the flying autonomous robot based on the digital data so that the flight path approaches the vehicle; and
landing (315) the flying autonomous robot on the vehicle while the vehicle is not currently in motion.

14. The computer program product of claim 13, further comprising additional instructions that are operable, when executed by the processor, to cause the processor to determine that the vehicle is headed in a direction that is consistent with a destination location of the flying autonomous robot.

15. The computer program product of claim 14, wherein the destination location of the flying autonomous robot is a delivery location and the vehicle is determined to be headed in the direction that is consistent with the delivery location of the flying autonomous robot.

## Patentansprüche

1. Verfahren, mit:
Empfangen (307), durch einen fliegenden autonomen Roboter, einer Fahrzeug-zu-Allen-Mitteilung, V2X-Mitteilung, die digitale Daten, die Pfadinformationen für einen Satz von Fahrzeugen beschreiben, die eine Richtung oder Trajektorie von jedem Fahrzeug des Satzes von Fahrzeugen angeben, als eine Angabe darüber, ob das Fahrzeug auf eine gleiche allgemeine Richtung wie der fliegende autonome Roboter zusteuert, kinematische Daten, die beschreiben, ob der Satz von Fahrzeugen momentan stationär oder momentan nicht in Bewegung ist, ob die Fahrzeuge des Satzes von Fahrzeugen dazu in der Lage sind, eine Unterstützung für den fliegenden autonomen Roboter bereitzustellen, und GPS-Daten, die GPS-Koordinaten des Satzes von Fahrzeugen beschreiben, umfasst, wobei der fliegende autonome Roboter ein V2X-Funkgerät umfasst, das die V2X-Mitteilung empfängt;
Auswählen (311), durch den fliegenden autonomen Roboter, eines Fahrzeugs von dem Satz von Fahrzeugen, auf dem zu landen ist, basierend auf den Pfaddaten und den kinematischen Daten für das Fahrzeug, die angeben, dass eine Bremse für das Fahrzeug im Eingriff ist;
Modifizieren (313), durch den fliegenden autonomen Roboter, eines Flugpfades des fliegenden autonomen Roboters basierend auf den digitalen Daten, sodass sich der Flugpfad dem Fahrzeug nähert; und
Landen (350) des fliegenden autonomen Roboters auf dem Fahrzeug, während sich das Fahrzeug momentan nicht bewegt.

2. Verfahren gemäß Anspruch 1, weiterhin mit:
Bestimmen, dass das Fahrzeug auf eine Richtung zusteuert, die mit einem Zielort des fliegenden autonomen Roboters konsistent ist.

3. Verfahren gemäß Anspruch 2, wobei der Zielort des fliegenden autonomen Roboters ein Lieferort ist und bestimmt ist, dass das Fahrzeug auf die Richtung zusteuert, die mit dem Lieferort des fliegenden autonomen Roboters konsistent ist.

4. Verfahren gemäß Anspruch 1, weiterhin mit einem Vornehmen einer finanziellen Zahlung von einem Besitzer des fliegenden autonomen Roboters auf ein Bankkonto, das mit einem registrierten Fahrer des Fahrzeugs verknüpft ist, als eine Kompensation dafür, dass der fliegende autonome Roboter mitgenommen wird.

5. Verfahren gemäß Anspruch 4, weiterhin mit einem Empfangen einer Benachrichtigung einer Anzahl von Meilen, die der fliegende autonome Roboter mitgefahren ist, wobei die finanzielle Zahlung auf der Anzahl von Meilen, die der fliegende autonome Roboter mitgefahren is, basiert.

6. Verfahren gemäß Anspruch 1, wobei die V2X-Mitteilung eine Basissicherheitsmitteilung umfasst.

7. Verfahren gemäß einem der Ansprüche 1 bis 6, wobei die digitalen Daten einen Ort einer GPS-Einheit, mit der das Fahrzeug ausgestattet ist, mit einer Genauigkeit von plus oder minus 1,5 Metern der tatsächlichen Position der GPS-Einheit, mit der das Fahrzeug ausgestattet ist, beschreiben.

8. System (200), mit:
einem Prozessor (225) des fliegenden autonomen Roboters, der betriebsfähig ist, um eine Fahrzeug-zu-Allen-Mitteilung, V2X-Mitteilung, zu empfangen (307), die digitale Daten, die Pfadinformationen für einen Satz von Fahrzeugen beschreiben, die eine Richtung oder Trajektorie von jedem des Satzes der Fahrzeuge angeben, als eine Angabe darüber, ob das Fahrzeug auf eine gleiche allgemeine Richtung wie der fliegende autonome Roboter zusteuert, kinematische Daten, die beschreiben, ob der Satz von Fahrzeugen momentan stationär oder momentan nicht in Bewegung ist, ob die Fahrzeuge des Satzes von Fahrzeugen dazu in der Lage sind, eine Unterstützung für den fliegenden autonomen Roboter bereitzustellen, und GPS-Daten, die GPS-Koordinaten des Satzes von Fahrzeugen beschreiben, umfasst, wobei der fliegende autonome Roboter ein V2X-Funkgerät umfasst, das die V2X-Mitteilung empfängt; und
einen nichtflüchtigen Speicher (227), der mit dem Prozessor kommunikativ gekoppelt ist, wobei der nichtflüchtige Speicher Computercode speichert, der betriebsfähig ist, wenn dieser durch den Prozessor ausgeführt wird, um den Prozessor zu veranlassen, ein Fahrzeug von dem Satz von Fahrzeugen, auf dem zu landen ist, auszuwählen (311), basierend auf den Pfaddaten und den kinematischen Daten für das Fahrzeug, die angeben, dass eine Bremse für das Fahrzeug im Eingriff ist, einen Flugpfad des fliegenden autonomen Roboters basierend auf den digitalen Daten zu modifizieren (313), sodass sich der Flugpfad dem Fahrzeug nähert, und den fliegenden autonomen Roboter auf dem Fahrzeug zu landen (315), wenn sich das Fahrzeug momentan nicht bewegt.

9. System gemäß Anspruch 8, wobei der Computercode weiterhin betriebsfähig ist, um zu bestimmen, dass das Fahrzeug auf eine Richtung zusteuert, die mit einem Zielort des fliegenden autonomen Roboters konsistent ist.

10. System gemäß Anspruch 9, wobei der Zielort des fliegenden autonomen Roboters ein Lieferort ist, und bestimmt ist, dass das Fahrzeug auf die Richtung zusteuert, die mit dem Lieferort des fliegenden autonomen Roboters konsistent ist.

11. System gemäß Anspruch 8, wobei die V2X-Mitteilung eine Basissicherheitsmitteilung umfasst.

12. System gemäß einem der Ansprüche 8 bis 11, wobei die digitalen Daten einen Ort einer GPS-Einheit, mit der das Fahrzeug ausgestattet ist, mit einer Genauigkeit von plus oder minus 1,5 Metern der tatsächlichen Position der GPS-Einheit, mit der das Fahrzeug ausgestattet ist, beschreiben.

13. Computerprogrammprodukt mit einem Prozessor (225) mit Instruktionen, die, wenn diese ausgeführt werden, den Prozessor veranlassen, Operationen durchzuführen, mit:
Empfangen (307) einer Fahrzeug-zu-Allen-Mitteilung, V2X-Mitteilung, die digitale Daten, die Pfadinformationen für einen Satz von Fahrzeugen beschreiben, kinematische Daten, die beschreiben, ob der Satz von Fahrzeugen momentan stationär oder momentan nicht in Bewegung ist, die eine Richtung oder Trajektorie von jedem Fahrzeug des Satzes von Fahrzeugen angeben, als eine Angabe darüber, ob das Fahrzeug auf die gleiche allgemeine Richtung zusteuert wie der fliegende autonome Roboter, als Angabe darüber, ob die Fahrzeuge des Satzes von Fahrzeugen dazu in der Lage sind, eine Unterstützung für den fliegenden autonomen Roboter bereitzustellen, und GPS-Daten, die GPS-Koordinaten des Satzes von Fahrzeugen beschreiben, umfasst, wobei der fliegende autonome Roboter ein V2X-Funkgerät umfasst, das die V2X-Mitteilung empfängt;
Auswählen (311) eines Fahrzeugs, auf dem zu landen ist, von dem Satz von Fahrzeugen, basierend auf den Pfaddaten und den kinematischen Daten für das Fahrzeug, die angeben, dass eine Bremse für das Fahrzeug im Eingriff ist;
Modifizieren (313) eines Flugpfades des fliegenden autonomen Roboters basierend auf den digitalen Daten, sodass sich der Flugpfad dem Fahrzeug nähert; und
Landen (315) des fliegenden autonomen Roboters auf dem Fahrzeug, während sich das Fahrzeug momentan nicht bewegt.

14. Computerprogrammprodukt gemäß Anspruch 13, weiterhin mit zusätzlichen Anweisungen, die, während diese durch den Prozessor ausgeführt werden, betriebsfähig sind, um den Prozessor zu veranlassen, zu bestimmen, dass das Fahrzeug auf eine Richtung zusteuert, die mit einem Zielort des fliegenden autonomen Roboters konsistent ist.

15. Computerprogrammprodukt gemäß Anspruch 14, wobei der Zielort des fliegenden autonomen Roboters ein Lieferort ist und bestimmt ist, dass das Fahrzeug auf die Richtung zusteuert, die mit dem Lieferort des fliegenden autonomen Roboters konsistent ist.

## Revendications

1. Procédé qui comprend :
la réception (307), par un robot autonome volant, de messages V2X, Véhicule-à-Tout, qui incluent une donnée numérique qui décrit une information de trajectoire pour un ensemble de véhicules qui indique un cap ou une trajectoire de chaque véhicule de l'ensemble de véhicules en tant qu'indication qui explique si le véhicule se dirige dans une même direction générale que le robot autonome volant, une donnée cinématique qui décrit si l'ensemble de véhicules sont actuellement stationnaires ou actuellement pas en mouvement, si les véhicules de l'ensemble de véhicules sont à même de fournir une assistance au robot autonome volant, et une donnée GPS qui décrit des coordonnées GPS de l'ensemble de véhicules, dans lequel le robot autonome volant inclut une radio V2X qui reçoit le message V2X ;
la sélection (311), par le robot autonome volant, d'un véhicule sur lequel atterrir parmi l'ensemble de véhicules sur la base de la donnée de trajectoire et de la donnée cinématique pour le véhicule qui indique qu'un frein pour le véhicule est actionné ;
la modification (313), par le robot autonome volant, d'une trajectoire de vol du robot autonome volant sur la base de la donnée numérique de sorte que la trajectoire de vol approche le véhicule ; et
l'atterrissage (315) du robot autonome volant sur le véhicule tandis que le véhicule n'est pas actuellement en mouvement.

2. Procédé selon la revendication 1, qui comprend en outre :
le fait de déterminer que le véhicule se dirige dans une direction qui est conforme à un emplacement de destination du robot autonome volant.

3. Procédé selon la revendication 2, dans lequel l'emplacement de destination du robot autonome volant est un emplacement de livraison et le véhicule est déterminé pour être dirigé dans la direction qui est conforme à l'emplacement de livraison du robot autonome volant.

4. Procédé selon la revendication 1, qui comprend en outre le fait d'effectuer un paiement financier depuis un propriétaire du robot autonome volant vers un compte bancaire associé à un conducteur enregistré du véhicule au titre de compensation pour faire faire un tour au robot autonome volant.

5. Procédé selon la revendication 4, qui comprend en outre la réception d'une notification d'un nombre de miles parcourus par le robot autonome volant, dans lequel le paiement financier est basé sur le nombre de miles parcourus par le robot autonome.

6. Procédé selon la revendication 1, dans lequel les messages V2X incluent un Message Général de Sécurité.

7. Procédé selon l'une quelconque des revendications 1-6, dans lequel la donnée numérique décrit un emplacement d'une unité GPS équipée contre le véhicule avec une précision de plus ou moins 1,5 mètre de la position actuelle de l'unité GPS équipée contre le véhicule.

8. Système (200) qui comprend :
un processeur (225) d'un robot autonome volant qui peut être exploité pour recevoir (307) des messages V2X, Véhicule-à-Tout, qui incluent une donnée numérique qui décrit une information de trajectoire pour un ensemble de véhicules qui indique un cap ou une trajectoire de chaque véhicule de l'ensemble de véhicules en tant qu'indication qui explique si le véhicule se dirige dans une même direction générale que le robot autonome volant, une donnée cinématique qui décrit si l'ensemble de véhicules sont actuellement stationnaires ou actuellement pas en mouvement, si les véhicules de l'ensemble de véhicules sont à même de fournir une assistance au robot autonome volant, et une donnée GPS qui décrit des coordonnées GPS de l'ensemble de véhicules, dans lequel le robot autonome volant inclut une radio V2X qui reçoit le message V2X ; et
une mémoire (227) non transitoire couplée en communication avec le processeur, dans lequel la mémoire non transitoire stocke un code informatique qui peut être exploité, lorsqu'il est exécuté par le processeur, pour amener le processeur à sélectionner (311) un véhicule sur lequel atterrir parmi l'ensemble de véhicules sur la base de la donnée de trajectoire et de la donnée cinématique pour le véhicule qui indique qu'un frein pour le véhicule est actionné, modifier (313) une trajectoire de vol du robot autonome volant sur la base de la donnée numérique de sorte que la trajectoire de vol approche le véhicule, et faire atterrir (315) le robot autonome volant sur le véhicule tandis que le véhicule n'est pas actuellement en mouvement.

9. Système selon la revendication 8, dans lequel le code informatique peut en outre être exploité pour déterminer que le véhicule se dirige dans une direction qui est conforme à un emplacement de destination du robot autonome volant.

10. Système selon la revendication 9, dans lequel l'emplacement de destination du robot autonome volant est un emplacement de livraison et le véhicule est déterminé pour être dirigé dans la direction qui est conforme à l'emplacement de livraison du robot autonome volant.

11. Système selon la revendication 8, dans lequel les messages V2X incluent un Message Général de Sécurité.

12. Système selon l'une quelconque des revendications 8-11, dans lequel la donnée numérique décrit un emplacement d'une unité GPS équipée contre le véhicule avec une précision de plus ou moins 1,5 mètre de la position actuelle de l'unité GPS équipée contre le véhicule.

13. Produit de programme informatique qui comprend un processeur (225) avec des instructions qui, lorsqu'elles sont exécutées, amènent le processeur à réaliser des opérations qui comprennent :
la réception (307) de messages V2X, Véhicule-à-Tout, qui incluent une donnée numérique qui décrit une information de trajectoire pour un ensemble de véhicules, une donnée cinématique qui décrit si l'ensemble de véhicules sont actuellement stationnaires ou actuellement pas en mouvement qui indique un cap ou une trajectoire de chaque véhicule de l'ensemble de véhicules en tant qu'indication qui explique si le véhicule se dirige dans une même direction générale que le robot autonome volant, si les véhicules de l'ensemble de véhicules sont à même de fournir une assistance au robot autonome volant, et une donnée GPS qui décrit des coordonnées GPS de l'ensemble de véhicules, dans lequel le robot autonome volant inclut une radio V2X qui reçoit le message V2X ;
la sélection (311) d'un véhicule sur lequel atterrir parmi l'ensemble de véhicules sur la base de la donnée de trajectoire et de la donnée cinématique pour le véhicule qui indique qu'un frein pour le véhicule est actionné ;
la modification (313) d'une trajectoire de vol du robot autonome volant sur la base de la donnée numérique de sorte que la trajectoire de vol approche le véhicule ; et
l'atterrissage (315) du robot autonome volant sur le véhicule tandis que le véhicule n'est pas actuellement en mouvement.

14. Produit de programme informatique selon la revendication 13, qui comprend en outre des instructions supplémentaires qui peuvent être exploitées, lorsqu'elles sont exécutées par le processeur, pour amener le processeur à déterminer que le véhicule se dirige dans une direction qui est conforme à un emplacement de destination du robot autonome volant.

15. Produit de programme informatique selon la revendication 14, dans lequel l'emplacement de destination du robot autonome volant est un emplacement de livraison et le véhicule est déterminé pour être dirigé dans la direction qui est conforme à l'emplacement de livraison du robot autonome volant.
